# EUROPÄISCHE PATENTSCHRIFT

(11) **EP 1 502 786 B1**
(45) Veröffentlichungstag und Bekanntmachung des Hinweises auf die Patenterteilung: **11.10.2006**
(21) Anmeldenummer: 04016430.3
(22) Anmeldetag: 13.07.2004
(51) Int. Cl.: B60H 1/34, B60R 21/09

(54) **Düsenanordnung in einem Fahrzeug**
Air vent assembly in a vehicle
Arrangement de buse d'aération dans un véhicule

(30) Priorität: 28.07.2003 DE 10334569
(43) Veröffentlichungstag der Anmeldung: 02.02.2005
(73) Patentinhaber: Behr GmbH & Co. KG, 70469 Stuttgart (DE)
(72) Erfinder: Derleth, Martin, Dipl.-Ing. (FH), 97453 Schonungen (DE); Feith, Thomas, Dipl.-Ing., 70825 Korntal-Münchingen (DE); Grieb, Andreas, 70499 Stuttgart (DE); Wolf, Walter, Dipl.-Ing., 71570 Oppenweiler-Zell (DE)

(56) Entgegenhaltungen:
- EP-A- 0 890 480
- DE-U- 20 217 646
- US-A- 3 456 572
- US-A- 3 888 506
- PATENT ABSTRACTS OF JAPAN Bd. 2003, Nr. 12, 5. Dezember 2003 (2003-12-05) & JP 2004 098762 A (DAIHATSU MOTOR CO LTD), 2. April 2004 (2004-04-02)

## Beschreibung

Die Erfindung betrifft eine Düsenanordnung in einem Fahrzeug, insbesondere in einem Kraftfahrzeug, gemäß dem Oberbegriff des Anspruchs 1.

Die Seiten- und Mitteldüse bei Kraftfahrzeugen sind in der Regel an einem Träger oder einem anderen starren Bauteil, wie beispielsweise einer Instrumententafel, fest angebracht und liegen häufig im Aufprallbereich des Kopfes von Fahrer oder Beifahrer in einem Crash-Fall. Hierbei ist die Düse üblicherweise in den im Träger ausgebildeten Luftkanal eingesteckt, wofür sich der Luftkanal im Einsteckbereich erweitert. Besonders kritisch ist hierbei die Mitteldüse, wobei sich auf Grund des stark verkürzten Bauraums zwischen Klimaanlage und Armaturenbrett eine blockartige Ausgestaltung der Düsenanordnung aus konstruktiven Gründen ergibt.

Gemäß einer alternativen bekannten Ausführungsform ist die Düse von außen auf den durch den Träger gebildeten Luftkanal gesteckt, wobei die Düse direkt am Träger anschlägt.

Dokument EP 0 890 480, das als nächstliegender Stand der Technik gesehen wird, offenbart eine Düsenanordnung nach dem Oberbegriff des Anspruchs 1. Im Crashfall wird die Düse vom Luftführungskanal abgetrennt.

Im Falle eines Crashs kann es bei den bekannten Düsenanordnungen zu erheblichen Verletzungen am Kopf kommen.

Es ist Aufgabe der Erfindung, eine verbesserte Düsenanordnung in einem Fahrzeug zur Verfügung zu stellen.

Diese Aufgabe wird gelöst durch eine Düsenanordnung mit den Merkmalen des Anspruchs 1. Vorteilhafte Ausgestaltungen sind Gegenstand der Unteransprüche.

Erfindungsgemäß ist eine Düsenanordnung vorgesehen, bei der die Düse oder zumindest der vordere Teil hiervon im Bedarfsfall, d.h. im Falle eines Crashs und eines Auftreffens eines Gegenstandes oder eines Kopfes, entsprechend der Deformation des Armaturenbrettes, in oder an dem die Düse angeordnet ist, in Richtung auf den Träger verschoben werden kann. Der Begriff des Trägers ist gemäß der vorliegenden Erfindung weit zu verstehen, so dass auch andere, eine Düse tragenden Teile darunter verstanden werden sollen.

In Folge der erfindungsgemäßen Ausgestaltung der Düsenanordnung ist auf Grund der Verschiebbarkeit ein gewisser Deformationsweg für die Düse gegenüber dem Träger gegeben, so dass die Düse im Crash-Fall nicht als starrer Vorsprung vorsteht, während der benachbarte Bereich des Armaturenbrettes sich verformt. Die Deformationswege der Oberfläche des Armaturenbrettes im Falle eines Kopfaufpralls bei einem Crash liegen üblicherweise zwischen 30 und 100 mm, weshalb der äußere Bereich der Düse einen entsprechenden Weg im Falle eines Crashs einfahrbar sein sollte, so dass Verletzungen auf Grund der Düse sicher vermieden werden können und der Aufprall des Kopfes möglichst großflächig erfolgt.

Bevorzugt ist die Düse zumindest teilweise in den Träger versenkbar, wobei hierfür die Düse in eine Öffnung des Trägers gesteckt ist. Dabei kann bevorzugt mittels eines Elastomers ein Schiebesitz die Verbindung zwischen Träger und Düse bilden, welcher die Verschiebbarkeit im Bedarfsfall gewährleistet.

Die Düse kann auch auf den Träger aufgesteckt sein, wobei in diesem Fall bevorzugt Sollbruchstellen an der Düse vorgesehen sind, die eine Verschiebung der Düse zumindest teilweise auf den Träger ermöglichen. Bevorzugt sind eine oder mehrere Sollbruchstellen quer zur Längsrichtung der Düse zwischen einem Klappen-Teil und einem Luftleit-Teil, in dem beispielsweise Lamellen angeordnet sind, vorgesehen, so dass sich die Düse im Crash-Fall teilt. Dabei ist bevorzugt eine Querschnittserweiterung oder eine Querschnittsverringerung zwischen dem Klappen-Teil und dem Luftleit-Teil vorgesehen. Alternativ kann im Falle einer auf den Träger gesteckten Düse auch eine Teilung in Längsrichtung der Düse vorgesehen sein, so dass sich die Düse im Crash-Fall spaltet und über den Träger schiebt.

Eine elastische Verbindung kann zwischen dem Träger und der Düse vorgesehen sein, die im Crash-Fall die Relativbewegung zum Träger ermöglicht. Alternativ kann an Stelle einer elastischen Verbindung eine Sollbruchstelle vorgesehen sein, welche die gleiche Funktion erfüllt. Auch eine Kombination von elastischer Verbindung und Sollbruchstelle ist prinzipiell möglich.

Bevorzugt ist die Düse mehrteilig ausgebildet, wobei die Verbindung zwischen den einzelnen Teilen der Düse im Crash-Fall gelöst wird. Es können bevorzugt Clips-Verbindungen oder reibschlüssige Verbindungen, jedoch auch beliebige andere Verbindungen vorgesehen sein, die sich bei einer vorgegebenen Krafteinwirkung lösen.

Bevorzugt bildet die Düsenanordnung einen Luftkanal mit im wesentlichen gleichbleibenden Querschnitt oder in Strömungsrichtung der Luft gesehen höchstens mit geringen Querschnittsänderungen. Dabei ist der Übergang zwischen der Düse und dem Träger bevorzugt derart ausgestaltet, dass strömungstechnisch keine Kanten vorhanden sind.

Gemäß einer bevorzugten Ausführungsform ist Teil der Düse ein Bereich oder Teil, der von einer Folie, einem wellenartig- oder faltenbalgartigen zusammenschiebbaren Material gebildet ist. Dies ermöglicht eine nahezu vollständige Angleichung der Oberflächen des Armaturenbrettes und der Düse (insbesondere dem Grill) im Falle einer Deformation.

Um eine optimale Sicherheit zu gewährleisten sind starre Bauteile nur außerhalb des Deformationswegs der Düsenanordnung angeordnet.

Im Folgenden wird die Erfindung anhand von Ausführungsbeispielen unter Bezugnahme auf die Zeichnung im Einzelnen erläutert. In der Zeichnung zeigen:
- Fig. 1: einen vereinfacht dargestellten Schnitt durch eine Düsenanordnung gemäß einem ersten Ausführungsbeispiel,
- Fig. 2: einen vereinfacht dargestellten Schnitt durch eine Düsenanordnung gemäß einem zweiten Ausführungsbeispiel,
- Fig. 3: einen vereinfacht dargestellten Schnitt durch eine Düsenanordnung gemäß einem dritten Ausführungsbeispiel,
- Fig. 4: einen vereinfacht dargestellten Schnitt durch eine Düsenanordnung gemäß einem vierten Ausführungsbeispiel,
- Fig. 5: eine perspektivische Explosionsdarstellung eines fünften Ausführungsbeispiels, wobei links oben ein Schnitt in Längsrichtung einer Clips-Verbindung dargestellt ist,
- Fig. 6A und 6B: vereinfacht dargestellte Schnitte durch ein sechstes Ausführungsbeispiel, wobei Fig. 6A die normale Position der Düse und Fig. 6B die Position der Düse nach einem Crash darstellt,
- Fig. 7: einen ausschnittsweise dargestellten Schnitt durch ein siebtes Ausführungsbeispiel,
- Fig. 8A und 8B: vereinfacht dargestellte Schnitte durch ein achtes Ausführungsbeispiel, wobei Fig. 8A die normale Position der Düse und Fig. 8B die Position der Düse nach einem Crash darstellt,
- Fig. 9A und 9B: vereinfacht dargestellte Schnitte durch ein neuntes Ausführungsbeispiel, wobei Fig. 9A die normale Position on der Düse und Fig. 9B die Position der Düse nach einem Crash darstellt, und
- Fig. 10: einen vereinfacht dargestellten Schnitt durch eine Düsenanordnung gemäß einem zehnten Ausführungsbeispiel.

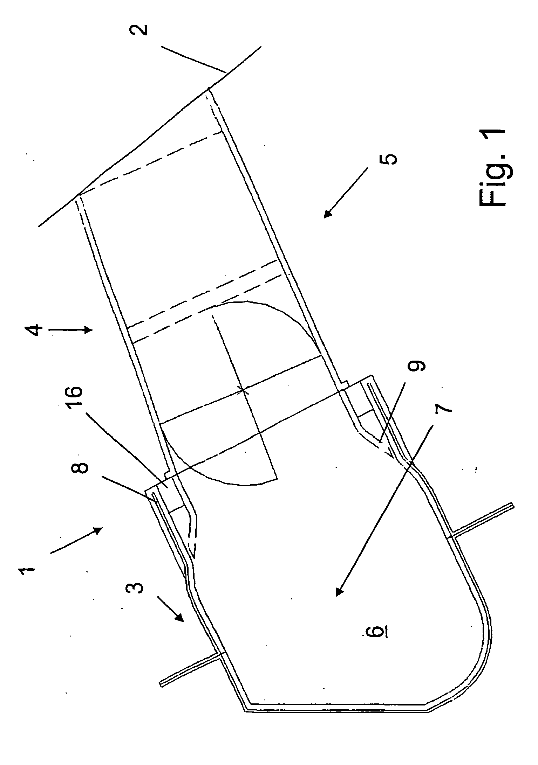

Eine erfindungsgemäße zu einem Belüftungssystem gehörende Düsenanordnung 1 ist in einem Kraftfahrzeug in einem Armaturenbrett 2, das in Fig. 1 nur schematisch angedeutet ist, angebracht. Hierbei ist lediglich eine Seitendüse dargestellt. Die Mitteldüse und die andere Seitendüse sind entsprechend ausgebildet. Die Düsenanordnung 1 weist einen aus einem entsprechend umgeformten Blech gebildeten Träger 3 und eine Düse 4 auf, welche in den Träger 3 eingesteckt ist. Hierbei ist der Träger 3 in Fig. 1 nur im Bereich seiner Luftauslass-Öffnung dargestellt.

Die Düse 4 ist einteilig ausgebildet, wobei im Inneren der Düse eine schematisch angedeutete Klappe und nicht näher dargestellte Lamellen angeordnet sind, welche eine Luftleitvorrichtung 5 bilden und zur Steuerung der dem Fahrzeuginnenraum zugeführten Luft dienen. Die Ausgestaltung derselben kann eine beliebige sein, jedoch ist deren Bewegungsmechanik bzw. - elektrik derart ausgebildet, dass sie eine Verschiebung der Düse 4 gegenüber dem Träger 3 nicht behindert. Ein vorzugsweise elastomerer Ring 16 bildet einen Schiebesitz und sorgt für eine verschiebbare Verbindung zwischen Träger 3 und Düse 4. Der Querschnitt dieses Ringes, kann dabei in Abweichung von dem in Fig. 1 dargestellten Rechteckprofil auch kreisförmig sein oder andere mögliche geometrische Formen aufweisen.

Der Träger 3 weist zum Durchlass der von einer Klimaanlage, die mit dem Belüftungssystem verbunden und von dem in Fig. 1 ein Luftkanal 6 dargestellt ist, kommenden Luft eine Öffnung 7 auf. Diese Öffnung 7 ist derart ausgebildet, dass sie einen zum Armaturenbrett 2 weisenden, umlaufenden Rand 8 aufweist, welcher einen sich verringernden Querschnitt aufweist, wobei in Bezug auf den Übergang auf Fig. 1 verwiesen wird. In dem Bereich mit dem geringeren Querschnitt ist die Düse 4 teilweise eingeführt, wobei die Düse 4 im trägernahen Bereich eine dem Übergang angepasste Gestalt aufweist, welche im Folgenden als Spoiler 9 bezeichnet wird, so dass die Luftströmung möglichst gering beeinflusst wird. Der Spoiler 9 ist gemäß dem vorliegenden Ausführungsbeispiel elastisch ausgebildet, so dass er sich gut an den Rand 8 anpasst und Maßungenauigkeiten ausgleicht. Die Herstellung erfolgt mittels Zwei-Komponenten-Spritzgießen. Alternativ kann der Spoiler 9 aus einem harten Material gefertigt sein, insbesondere aus dem gleichen Material wie der weitere Teil der Wandung der Düse 4. Ebenfalls kann das Dichtungsprofil des Spoilers 9 getrennt hergestellt und an der Düse 4 angebracht werden. Anstelle eines elastisch ausgebildeten Spoilers 9 kann auch ein geschäumter Spoiler verwendet werden, der beispielsweise mittels Zwei-Komponenten-Spritzgießen in einem Schritt mit der Wandung der Düse 4 hergestellt werden kann.

Gemäß einer nicht dargestellten Abwandlung kann der Spoiler auch am Träger ausgebildet sein, so dass sich die Form der Düse vereinfacht. Dabei kann der Spoiler als zusätzliches Teil am Träger angebracht sein, wobei dieser eine Sollbruchstelle aufweist, sofern er aus einem harten Material gefertigt ist. Alternativ kann er aus einem weichen Elastomer, insbesondere in Zwei-Komponenten-Technik gefertigt sein.

Im Falle eines Crashs und dem Auftreffen eines Gegenstandes oder eines Kopfes verformt sich das Armaturenbrett 2 und die Düse 4 wird in Längsrichtung in den Träger 3 geschoben. Der hierbei zu überwindende Widerstand ist relativ gering. Gegebenenfalls sind an zur Positionierung der Düse 4 im Träger 3 vorgesehenen Vorsprüngen Sollbruchstellen (nicht dargestellt) vorgesehen, die bei einem Crash die Düse 4 in Richtung zum Träger 3 freigeben. Der maximal mögliche Verschiebeweg der Düse 4 ist gleich oder größer als die maximal zu erwartende Verformung des Armaturenbrettes 2. Dadurch lassen sich Verletzungen durch bei einem Verformen des Armaturenbrettes 2 überstehende Bereiche der Düse 4 vermeiden.

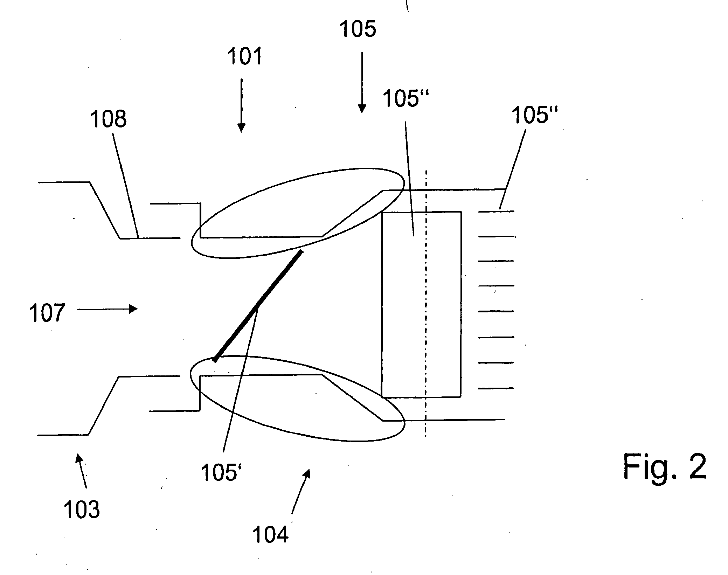

Gemäß dem in Fig. 2 dargestellten, zweiten Ausführungsbeispiel werden gleiche oder gleichwirkende Bauteile oder Elemente mit um 100 höheren Bezugszeichen versehen.

Gemäß dem zweiten Ausführungsbeispiel wird die zu einem Belüftungssystem gehörende Düsenanordnung 101, die in einem Armaturenbrett (nicht dargestellt) durch einen Träger 103 und eine Düse 104 gebildet, welche auf den Träger 103 aufgesteckt ist. Hierbei ist der Träger 103 in Fig. 2 nur im Bereich seiner Luftauslass-Öffnung dargestellt.

Die Düse 104 ist einteilig ausgebildet, wobei im Inneren der Düse eine schematisch angedeutete Klappe 105' und Lamellen 105" angeordnet sind, welche eine Luftleitvorrichtung 105 bilden und zur Steuerung der dem Fahrzeuginnenraum zugeführten Luft dienen. Die Ausgestaltung derselben kann, entsprechend dem ersten Ausführungsbeispiel, eine beliebige sein, jedoch ist deren Bewegungsmechanik bzw. -elektrik derart ausgebildet, dass sie eine Verschiebung der Düse 104 gegenüber dem Träger 103 nicht behindert, wobei jedoch im in Fig. 2 mit Ellipsen gekennzeichneten Bereich mindestens eine Sollbruchstelle (nicht dargestellt) vorgesehen ist, auf die an späterer Stelle näher eingegangen wird.

Der Träger 103 weist eine Öffnung 107 auf, welche derart ausgebildet ist, dass sie einen zum Armaturenbrett weisenden, umlaufenden Rand 108 aufweist, welcher einen sich verringernden Querschnitt aufweist. Der Rand 108 weist an seinem Ende einen Querschnitt auf, der dem des Strömungskanals der Düse 104 entspricht, wie aus Fig. 2 entnommen werden kann. Zur Fixierung und Abdichtung der Düse 104 gegenüber dem Träger 103 ist an der Düse 104 ein Rand mit einem größeren Querschnitt vorgesehen, der über den Rand 108 des Trägers 103 aufgesteckt ist. Zusätzliche Dichtmittel können in diesem Bereich angeordnet sein.

Die Sollbruchstelle kann in Längsrichtung der Düse 104 verlaufen, so dass die Wandung der Düse 104 im Falle eines Crashs und eines Auftreffens eines Gegenstandes oder eines Kopfes auf dem Armaturenbrett im Bereich der Düse 104 in Längsrichtung aufgeschlitzt wird und sich auf den Träger 103 zu bewegt. Um einen möglichst geringen Widerstand zu bieten, ist der Rand 108 des Trägers und der am Träger 103 anliegende Bereich der Düse 104 entsprechend abgerundet oder abgeschrägt ausgebildet.

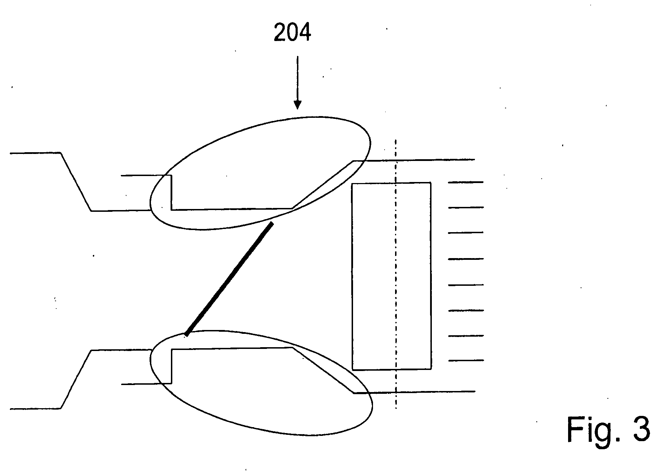

Fig. 3 zeigt ein drittes Ausführungsbeispiel, welches im Wesentlichen dem zweiten Ausführungsbeispiel entspricht, jedoch ist in dem durch die Ellipsen gekennzeichneten Bereich an Stelle einer Sollbruchstelle mindestens ein elastischer Bereich vorgesehen, der eine entsprechende Ausweichbewegung zumindest des am Armaturenbrett angeordneten Bereichs der Düse 204 ermöglicht.

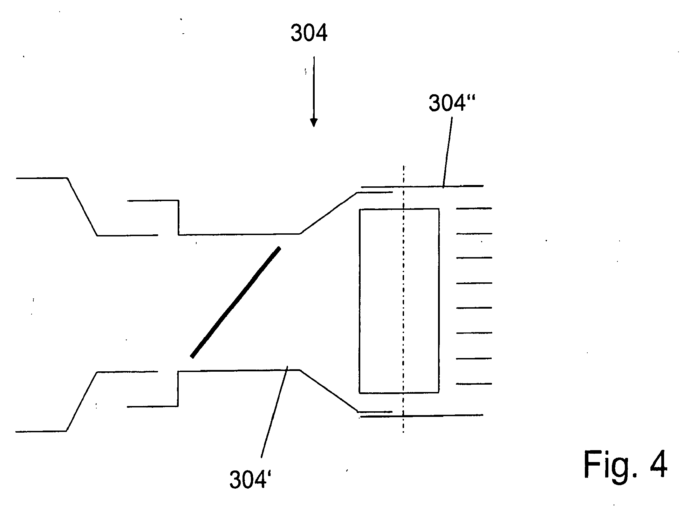

In Fig. 4 ist ein viertes Ausführungsbeispiel dargestellt, welches eine zweiteilige Ausgestaltung der Düse 304 zeigt. Ansonsten entspricht das vierte Ausführungsbeispiel dem in Fig. 2 dargestellten, zweiten Ausführungsbeispiel. Hierbei dient der Anlagebereich der beiden Teile 304' und 304" der Düse 304 als Sollbruchstelle, so dass wiederum eine Längsverschiebung des vorderen, im oder am Armaturenbrett angeordneten Bereichs der Düse 304 im Bedarfsfall gewährleistet ist.

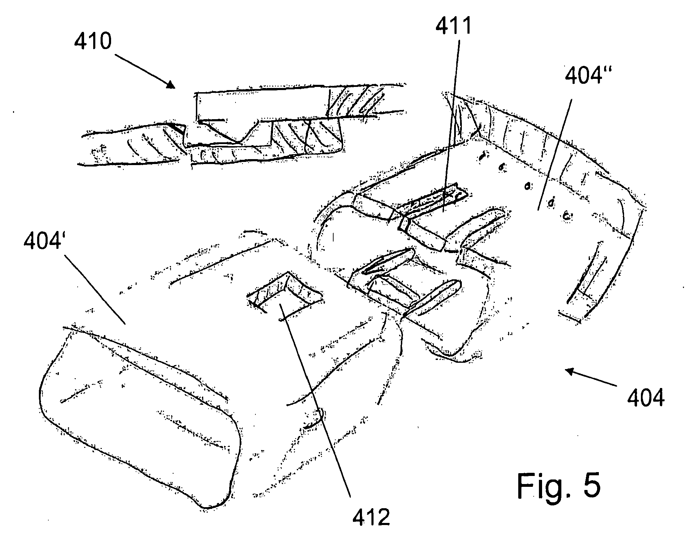

Fig. 5 zeigt ein fünftes Ausführungsbeispiel, wobei die Düse 404 zweiteilig aufgebaut ist, nämlich mit einem Klappen-Teil 404' und einem Grill-Teil 404", welches den im Armaturenbrett angeordneten Teil bildet. Hierbei sitzt der Klappen-Teil 404' fest auf einem nicht dargestellten Träger, beispielsweise wie in Fig. 2 dargestellt. Der Grill-Teil 404" ist auf den Klappen-Teil 404' gesteckt, wobei die Positionierung mittels zweier Clips-Verbindungen 410 erfolgt, wobei eine oben und eine unten in der Düse 404 vorgesehen ist. Zwei Federarme 411 sind hierbei am Grill-Teil 404" ausgebildet, die in Vertiefungen oder Öffnungen 412 federnd eingreifen, welche im Klappen-Teil 404' vorgesehen sind. Bei einer alternativen nicht dargestellten Ausführungsform kann das Klappenteil 404' auf das Grillteil 404" aufgesteckt sein. Zudem kann die Anordnung der Befestigungselemente am Klappenteil und am Grillteil vertauscht sein. Außerdem kann die Anzahl und Anordnung der Befestigungselemente variieren.

Im Bedarfsfall kann die Federkraft der beiden Federarme 411 leicht überwunden werden, so dass sich der Grill-Teil 404" ohne größeren Kraftaufwand über den Klappen-Teil 404' schiebt.

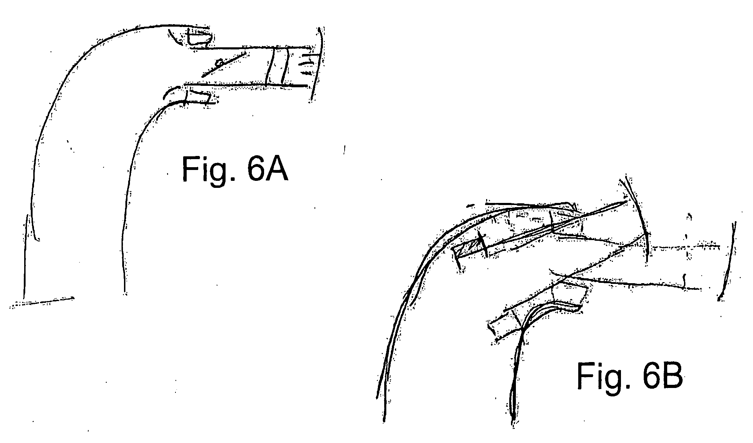

In den Figuren 6A und 6B ist ein sechstes Ausführungsbeispiel dargestellt, welches im Wesentlichen dem ersten Ausführungsbeispiel entspricht, jedoch erfolgt, wie insbesondere aus Fig. 6B ersichtlich ist, keine reine Längsverschiebung im Bedarfsfall, sondern es erfolgt eine Kurvenbewegung, vorwiegend im hinteren Bereich.

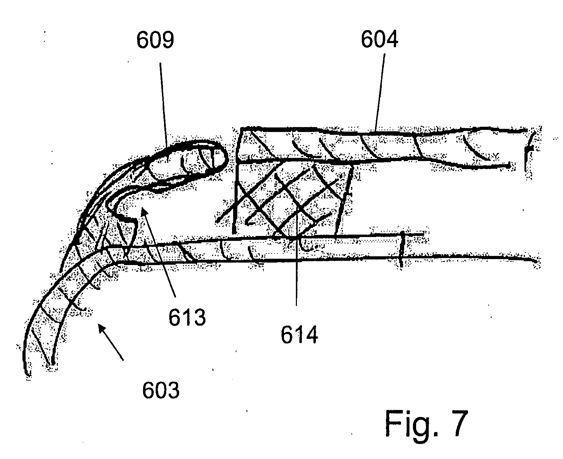

In Fig. 7 ist ein siebtes Ausführungsbeispiel dargestellt, das im Wesentlichen dem ersten Ausführungsbeispiel entspricht, jedoch ist der Spoiler 609 am Träger 603 angebracht und mit einer umlaufenden Sollbruchstelle 613 auf der zur Düse 604 weisenden Seite versehen. Im Zwischenraum zwischen Düse 604 und Träger 603 ist ein Dichtelement 614 vorgesehen.

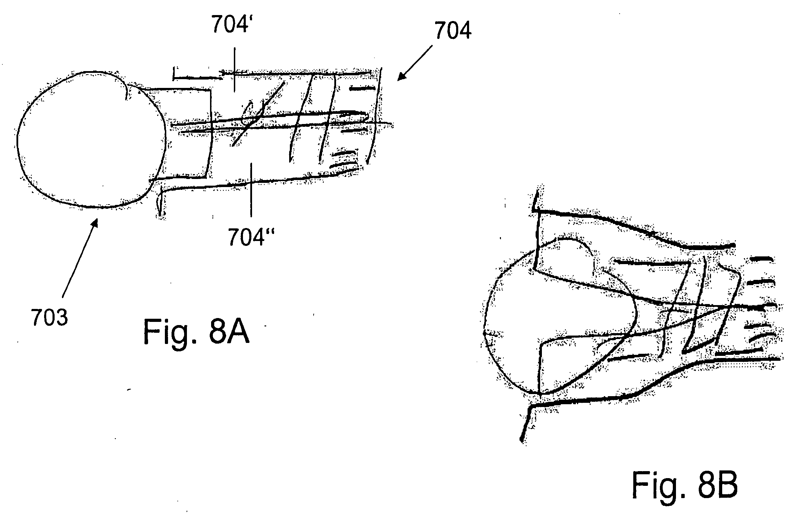

In den Figuren 8A und 8B ist ein achtes Ausführungsbeispiel dargestellt, bei dem die Düse 704 zweiteilig ausgebildet ist, wobei die Trennlinie der beiden Teile 704' und 704" in Längsrichtung der Düse 704 verläuft und die beiden Teile 704' und 704" beispielsweise mittels nicht näher dargestellten Clips-Verbindungen oder anderen Verbindungsarten zusammengehalten werden. Diese Clips-Verbindungen sind beispielsweise mit nicht dargestellten Sollbruchstellen versehen, welche im Bedarfsfall ein Auseinanderbrechen der Düse 704 ermöglichen, so dass sie sich weiter über den Träger 703 schieben kann.

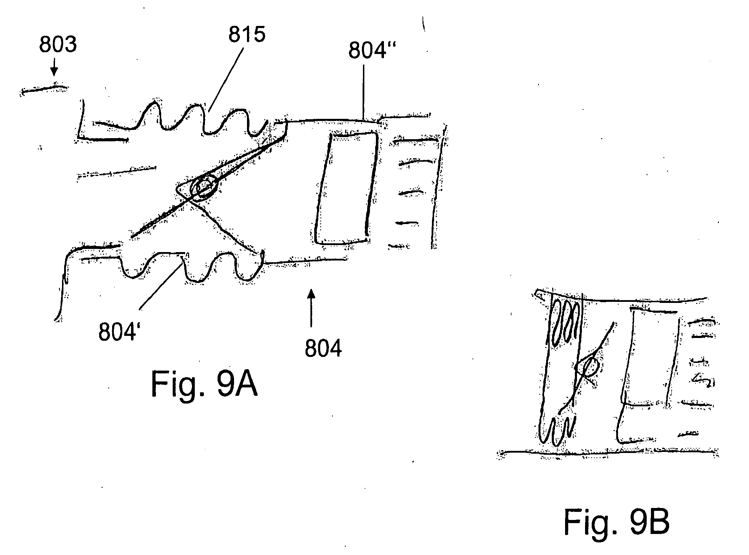

Die Figuren 9A und 9B zeigen ein neuntes Ausführungsbeispiel, wobei über den Träger 803 beispielsweise ein von einer Folie 815 gebildeter Teil 804' der Düse 804 geschoben ist. Dabei ist dieser Teil 804' mit einer Wellenstruktur faltenbalgartig ausgebildet und auf den Träger 803 geschoben. Mit seiner anderen Seite ist der Teil 804' mit dem zweiten Teil 804" der Düse 804 fest verbunden, wobei die beiden Teile 804' und 804" auch einstückig ausgebildet sein können. Der zweite Teil 804" der Düse 804 ist an seinem dem Träger 803 abgewandten Bereich fest mit dem Armaturenbrett verbunden und kann sich gemeinsam mit demselben relativ zum Träger 803 bewegen (vgl. Fig. 9B), so dass im Bedarfsfall eine Relativbewegung zwischen Träger 803 und Düse 804 möglich ist. Dabei bewegt sich der im Armaturenbrett angeordnete Teil 804" der Düse 804 entsprechend demselben, so dass die Verletzungsgefahr minimiert wird.

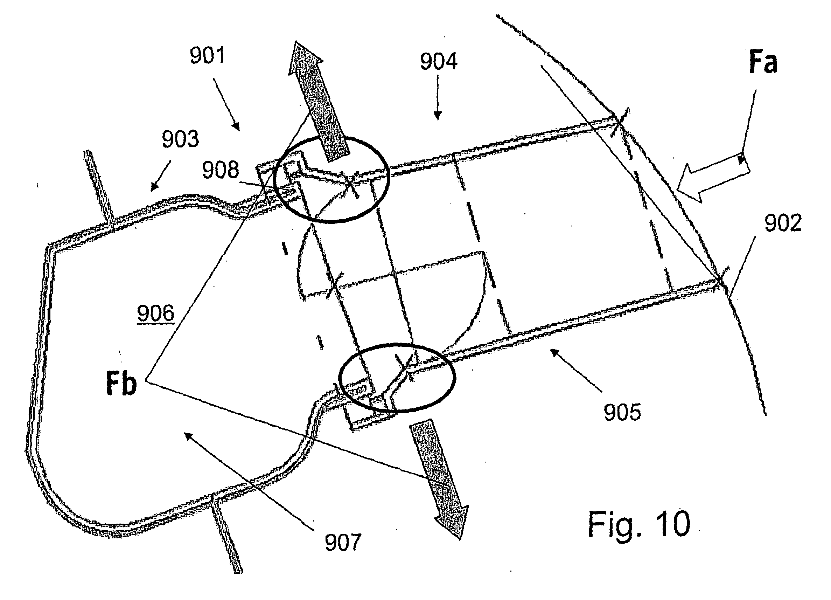

In Fig. 10 ist ein zehntes Ausführungsbeispiel dargestellt, bei dem ein Träger 903 zum Durchlass der von einer Klimaanlage, die mit dem Belüftungssystem verbunden und von dem in Fig. 10 ein Luftkanal 906 dargestellt ist, kommenden Luft, eine Öffnung 907 aufweist. Diese Öffnung 907 ist mit einem zum Armaturenbrett weisenden Rand 908 ausgebildet.

Im Unterschied zu Figur 1 ist die Düse 904 nicht in den Träger 903 eingesteckt sondern den Rand 908 der Öffnung 907 umschließend oder umstülpend, aufgesteckt, wobei die Düse 904 im trägernahen Bereich eine dem Übergang angepasste Gestalt aufweist. Im Bereich der Steckverbindung, weist die Öffnung 907 in etwa denselben Innendurchmesser wie die Düse 904 auf, wobei das rohrförmige Ende der Düse 904 im Bereich der Öffnung 907 des Trägers 903 konisch nach außen erweitert und mit einem zylinderförmigen Abschlussabschnitt versehen ist, der über den Rand 908 der Öffnung 907 aufsteckbar ist.

Eine durch einen Auf- oder Anprall hervorgerufene Auslösekraft Fa wird durch den konischen Teil der Düse 904 bzw. der Verbindungsschräge teilweise in eine Querkraft Fb umgesetzt, was eine Erhöhung der Bruchlast zur Folge hat. Optional kann ein Spoiler (in Figur 10 nicht dargestellt) im Übergangsbereich vom Träger 903 zur Düse 904 für eine möglichst geringe Beeinflussung der Luftströmung sorgen. Der Spoiler kann elastisch ausgebildet sein, so dass er sich gut an den Rand 908 anpasst und Maßungenauigkeiten ausgleicht. Die Herstellung erfolgt vorzugsweise mittels Zwei-Komponenten-Spritzgießens. Alternativ kann der Spoiler aus einem harten Material gefertigt sein, insbesondere aus dem gleichen Material wie der weitere Teil der Wandung der Düse 904. Ebenfalls kann das Dichtungsprofil des Spoilers getrennt hergestellt und an der Düse 904 angebracht werden. Anstelle eines elastisch ausgebildeten Spoilers kann auch ein geschäumter Spoiler verwendet werden, der beispielsweise mittels Zwei-Komponenten-Spritzgießen in einem Schritt mit der Wandung der Düse hergestellt werden kann.

Um ein Einrollen von Dichtlippen, die am Ende der Düse oder des Trägers angeordnet sind, zu verhindern, erfolgt der Einbau derart, dass die Düse etwas zu weit in oder auf den Träger geschoben wird und anschließend wieder ein kleines Stück nach außen bewegt wird.

Alternativ können Dichtlippen vorgesehen sein, die ein entsprechendes Profil aufweisen, das ein Aufrollen verhindert. Ebenfalls kann ein hart ausgebildeter Spoiler in Verbindung mit einem nachgeordneten Dichtelement, beispielsweise aus Schaumstoff, vorgesehen sein.

### Bezugszeichenliste

1, 101, 901 Düsenanordnung
2, 902 Armaturenbrett
3, 103, 603, 703, 803, 903 Träger
4, 104, 204, 304, 404, 604, 704, 804, 904 Düse
5, 105, 905 Luftleitvorrichtung
6, 906 Luftkanal
7, 107, 907 Öffnung
8, 108, 908 Rand
9, 609 Spoiler
16 Ring
105' Klappe
105" Lamellen
304', 304", 404', 404", 704', 704", 804', 804" Teil der Düse
410 Clips-Verbindung
411 Federarm
412 Öffnung
613 Sollbruchstelle
614 Dichtelement
815 Folie

## Patentansprüche

1. Düsenanordnung in einem Fahrzeug, insbesondere einem Kraftfahrzeug, mit mindestens einer Düse (4, 104, 204, 304, 404, 604, 704, 804, 904), die an einem Träger (3, 103, 603, 703, 803, 903) angeordnet ist, **dadurch gekennzeichnet, dass** die Düse (4, 104, 204, 304, 404, 604, 704, 804, 904) im Crash-Fall gegenüber dem Träger (3, 103, 603, 703, 803, 903) verschiebbar ist.

2. Düsenanordnung nach Anspruch 1, **dadurch gekennzeichnet, dass** die Düse (4, 104, 204, 304, 404, 604, 704, 804, 904) in den Träger (3, 103, 603, 703, 803, 903) eingesteckt oder auf denselben aufgesteckt ist.

3. Düsenanordnung nach Anspruch 1 oder 2, **dadurch gekennzeichnet, dass** die Düse (4, 604) in dem Träger (3, 603) zumindest teilweise versenkbar ist.

4. Düsenanordnung nach einem der vorhergehenden Ansprüche, **dadurch gekennzeichnet, dass** eine elastische Verbindung zwischen dem Träger und der Düse (204) vorgesehen ist, die im Crash-Fall die Relativbewegung zum Träger ermöglicht.

5. Düsenanordnung nach einem der vorhergehenden Ansprüche, **dadurch gekennzeichnet, dass** mindestens eine Sollbruchstelle (613) vorgesehen ist, die im Crash-Fall die Relativbewegung zum Träger (3, 103, 603, 703) freigibt.

6. Düsenanordnung nach einem der vorhergehenden Ansprüche, **dadurch gekennzeichnet, dass** die Düse (304, 404, 704) mehrteilig ausgebildet ist, wobei die Verbindung zwischen den einzelnen Teilen (304', 304", 404', 404", 704', 704") der Düse (304, 404, 704) im Crash-Fall gelöst wird.

7. Düsenanordnung nach einem der vorstehenden Ansprüche, **dadurch gekennzeichnet, dass** die Düse (304, 404, 704, 804) mehrteilig ausgebildet ist, wobei mindestens ein Teil (304', 304", 404', 404", 704', 704", 804', 804") vorgesehen ist, das über eine Luftauslass-Öffnung (7, 107) im Träger (3, 103, 603, 703, 803) gesteckt ist.

8. Düsenanordnung nach Anspruch 7, **dadurch gekennzeichnet, dass** im Teil (304', 404', 704', 704") eine Klappe angeordnet ist.

9. Düsenanordnung nach einem der Ansprüche 6 bis 8, **dadurch gekennzeichnet, dass** auf den Teil (304', 404') ein zweites Düsen-Teil (304", 404") gesteckt ist.

10. Düsenanordnung nach Anspruch 9, **dadurch gekennzeichnet, dass** im zweiten Düsen-Teil (304", 404") zumindest ein Teil einer Luftleitvorrichtung (5, 105) angeordnet ist.

11. Düsenanordnung nach einem der Ansprüche 6 bis 10, **dadurch gekennzeichnet, dass** die einzelnen Teile (304', 304", 404', 404") der mehrteilig ausgebildeten Düse (304, 404) jeweils auf einen mit einem kleineren Querschnitt ausgebildeten Bereich des Trägers (703) und/oder des benachbarten, trägernäheren Teiles (304', 404') aufgesteckt sind, wobei der aufgesteckte Teil (304', 304", 404', 404") bereichsweise einen etwas größeren Querschnitt aufweist.

12. Düsenanordnung nach einem der vorhergehenden Ansprüche, **dadurch gekennzeichnet, dass** die Düsenanordnung (1, 101) einen Luftkanal (6) mit im Wesentlichen gleich bleibenden Querschnitt oder in Strömungsrichtung der Luft gesehen höchstens mit geringen Querschnittsänderungen bildet.

13. Düsenanordnung nach einem der vorhergehenden Ansprüche, **dadurch gekennzeichnet, dass** wenigstens ein Teil der Düse (804) ein Bereich oder Teil (804') ist, der von einer Folie (815), einem wellenartig- oder faltenbalgartigen zusammenschiebbaren Material gebildet ist.

14. Düsenanordnung nach einem der vorhergehenden Ansprüche, **dadurch gekennzeichnet, dass** die Düsenanordnung (1, 101) im Crash-Fall einen Deformationsweg von mindestens 30 mm, insbesondere 100 mm, aufweist.

15. Düsenanordnung nach einem der vorhergehenden Ansprüche, **dadurch gekennzeichnet, dass** starre Bauteile nur außerhalb des Deformationswegs der Düsenanordnung (1, 101) angeordnet sind.

16. Düsenanordnung nach einem der vorhergehenden Ansprüche, **dadurch gekennzeichnet, dass** zwischen dem Träger und der Düse und/oder zwei Teilen (404', 404", 704', 704") der Düse (404. 704) mindestens eine Clips-Verbindung (410) vorgesehen ist.

17. Düsenanordnung nach einem der vorhergehenden Ansprüche, **dadurch gekennzeichnet, dass** zwischen dem Träger und der Düse und/oder zwei Teilen (404', 404", 704', 704") der Düse (404. 704) mindestens eine Sollbruchstelle und/oder eine Verschiebestelle vorgesehen ist.

18. Düsenanordnung nach einem der vorhergehenden Ansprüche, **dadurch gekennzeichnet, dass** die Düse (704) in Längsrichtung geteilt zweiteilig ausgebildet ist.

## Claims

1. Air vent assembly in a vehicle, in particular a motor vehicle, with at least one air vent (4, 104, 204, 304, 404, 604, 704, 804, 804) located on a support (3, 103, 603, 703, 803, 903), **characterised in that** the air vent (4, 104, 204, 304, 404, 604, 704, 804, 804) is displaceable relative to the support (3, 103, 603, 703, 803, 903) in a crash.

2. Air vent assembly according to claim 1, **characterised in that** the air vent (4, 104, 204, 304, 404, 604, 704, 804, 804) is inserted into or pushed onto the support (3, 103, 603, 703, 803, 903) in a crash.

3. Air vent assembly according to claim 1 or 2, **characterised in that** the air vent (4, 604) is at least partially retractable into the support (3, 603)

4. Air vent assembly according to any of the preceding claims, **characterised in that** an elastic connection is provided between the support and the air vent (204) to allow its movement relative to the support in a crash.

5. Air vent assembly according to any of the preceding claims, **characterised in that** at least one predetermined breaking point (613) is provided to enable the movement relative to the support (3, 103, 603, 703) in a crash.

6. Air vent assembly according to any of the preceding claims, **characterised in that** the air vent (304, 404, 704) is designed in several parts, the connection between the individual parts (304', 304", 404', 404", 704', 704") of the air vent (304, 404, 704) being broken only in a crash.

7. Air vent assembly according to any of the preceding claims, **characterised in that** the air vent (304, 404, 704, 804) is designed in several parts, at least one part (304', 304", 404', 404", 704', 704", 804', 804") being pushed over an air outlet (7, 107) in the support (3, 103, 603, 703, 803).

8. Air vent assembly according to claim 7, **characterised in that** a damper is located in the part (304', 404', 704', 704").

9. Air vent assembly according to any of claims 6 to 8, **characterised in that** a second air vent part (304", 404") is pushed onto the part (304', 404').

10. Air vent assembly according to claim 9, **characterised in that** at least part of an air guidance device (5, 105) is located in the second air vent part (304", 404").

11. Air vent assembly according to any of claims 6 to 10, **characterised in that** the individual parts (304', 304", 404', 404") of the multi-part air vent (304, 404) are each pushed onto a section of the support (703) and/or of the adjacent part (304', 404') closer thereto which has a smaller cross-section, the pushed-on part (304', 304", 404', 404") having a slightly larger cross-section in one area.

12. Air vent assembly according to any of the preceding claims, **characterised in that** the air vent assembly (1, 101) forms an air duct (6) with a substantially constant cross-section or only slight cross-sectional variations in the airflow direction.

13. Air vent assembly according to any of the preceding claims, **characterised in that** at least part of the air vent (804) is an area or part (804) represented by a sheet (815) or by a material capable of being folded to form corrugations or bellows.

14. Air vent assembly according to any of the preceding claims, **characterised in that** the air vent assembly (1, 101) has a deformation distance of at least 30 mm, in particular 100 mm, in a crash.

15. Air vent assembly according to any of the preceding claims, **characterised in that** any rigid components are only located outside the deformation distance of the air vent assembly (1, 101).

16. Air vent assembly according to any of the preceding claims, **characterised in that** at least one clip connection (410) is provided between the support and the air vent and/or between two parts (404', 404", 704', 704") of the air vent (404, 704).

17. Air vent assembly according to any of the preceding claims, **characterised in that** at least one predetermined breaking point and/or displacement point are/is provided between the support and the air vent and/or between two parts (404', 404", 704', 704") of the air vent (404, 704).

18. Air vent assembly according to any of the preceding claims, **characterised in that** the air vent (704) is divided into two parts in the longitudinal direction.

## Revendications

1. Agencement de buses dans un véhicule, en particulier un véhicule automobile, comprenant au moins une buse (4, 104, 204, 304, 404, 604, 704, 804, 904) qui est disposée sur un support (3, 103, 603, 703, 803, 903), **caractérisé en ce que** la buse (4, 104, 204, 304, 404, 604, 704, 804, 904), en cas de collision, est mobile par rapport au support (3, 103, 603, 703, 803, 903).

2. Agencement de buses selon la revendication 1, **caractérisé en ce que** la buse (4, 104, 204, 304, 404, 604, 704, 804, 904) est emboîtée dans le support (3, 103, 603, 703, 803, 903) ou bien emboîtée sur celui-ci.

3. Agencement de buses selon la revendication 1 ou 2, **caractérisé en ce que** la buse (4, 604) est au moins partiellement escamotable dans le support (3, 603).

4. Agencement de buses selon l'une quelconque des revendications précédentes, **caractérisé en ce qu'**un assemblage élastique est prévu entre le support et la buse (204), assemblage élastique qui, en cas de collision, permet le mouvement relatif par rapport au support.

5. Agencement de buses selon l'une quelconque des revendications précédentes, **caractérisé en ce qu'**il est prévu au moins un point destiné à la rupture (613) qui, en cas de collision, permet le mouvement relatif par rapport au support (3, 103, 603, 703).

6. Agencement de buses selon l'une quelconque des revendications précédentes, **caractérisé en ce que** la buse (304, 404, 704) est conçue en plusieurs parties, où l'assemblage entre les différentes parties (304', 304", 404', 404", 704', 704") de la buse (304, 404, 704) est détaché en cas de collision.

7. Agencement de buses selon l'une quelconque des revendications précédentes, **caractérisé en ce que** la buse (304, 404, 704, 804) est conçue en plusieurs parties, où il est prévu au moins une partie (304', 304", 404', 404", 704', 704", 804', 804") qui est emboîtée dans le support (3, 103, 603, 703, 803), par une ouverture de sortie d'air (7, 107).

8. Agencement de buses selon la revendication 7, **caractérisé en ce qu'**un volet est disposé dans la partie (304', 404', 704', 704").

9. Agencement de buses selon l'une quelconque des revendications 6 à 8, **caractérisé en ce qu'**une deuxième partie de buse (304", 404") est emboîtée sur la partie (304', 404').

10. Agencement de buses selon la revendication 9, **caractérisé en ce qu'**au moins une partie d'un dispositif déflecteur d'air (5, 105) est disposée dans la deuxième partie de buse (304", 404").

11. Agencement de buses selon l'une quelconque des revendications 6 à 10, **caractérisé en ce que** les différentes parties (304', 304", 404', 404") de la buse (304, 404) configurée en plusieurs parties sont emboîtées respectivement sur une zone du support (703) configurée en ayant une plus petite section, et / ou sur une zone de la partie voisine (304', 404') plus proche du support, où la partie emboîtée (304', 304", 404', 404") présente, par zones, une section un peu plus grande.

12. Agencement de buses selon l'une quelconque des revendications précédentes, **caractérisé en ce que** l'agencement de buses (1, 101) forme un conduit d'air (6) ayant une section pratiquement constante, ou bien, vu dans la direction d'écoulement de l'air, ayant tout au plus de faibles variations de section.

13. Agencement de buses selon l'une quelconque des revendications précédentes, **caractérisé en ce qu'**au moins une partie de la buse (804) est une zone ou une partie (804') qui est formée par une feuille (815), par une matière pouvant former des plis du type ondulations ou du type soufflet.

14. Agencement de buses selon l'une quelconque des revendications précédentes, **caractérisé en ce que** l'agencement de buses (1, 101) présente, en cas de collision, une distance de déformation d'au moins 30 mm, en particulier de 100 mm.

15. Agencement de buses selon l'une quelconque des revendications précédentes, **caractérisé en ce que** des composants rigides sont disposés seulement à l'extérieur de la distance de déformation de l'agencement de buses (1, 101).

16. Agencement de buses selon l'une quelconque des revendications précédentes, **caractérisé en ce qu'**il est prévu au moins un assemblage clipsé (410) entre le support et la buse ou bien entre deux parties (404', 404", 704', 704") de la buse (404, 704).

17. Agencement de buses selon l'une quelconque des revendications précédentes, **caractérisé en ce qu'**il est prévu au moins un point destiné à la rupture et/ou un point de déplacement entre le support et la buse et / ou entre deux parties (404', 404", 704', 704") de la buse (404, 704).

18. Agencement de buses selon l'une quelconque des revendications précédentes, **caractérisé en ce que** la buse (704), divisée dans la direction longitudinale, est configurée en deux parties.
